# DEMANDE DE BREVET EUROPEEN

(11) **EP 2 648 023 A1**
(43) Date de publication de la demande: **09.10.2013**
(21) Numéro de dépôt: 13001715.5
(22) Date de dépôt: 04.04.2013
(51) Int. Cl.: G02B 6/00, D03D 15/00, B60Q 3/00, B60Q 3/02, F21V 8/00

(54) **Système d'éclairage, plaque d'immatriculation éclairante et procédé de fabrication de la plaque d'immatriculation**

(30) Priorité: 04.04.2012 FR 1201004
(71) Demandeur: G.I.A., 75008 Paris (FR)
(72) Inventeur: Lludriguez, Thierry, 16330 Vars (FR)
(74) Mandataire: Audic, Hervé

(57) **Abrégé**

Ce système d'éclairage comporte : un tissu éclairant (204) comportant une trame (206) qui est souple et comporte un assemblage régulier de fibres ou de fils entrecroisés, dont une partie au moins sont des fibres optiques, des extrémités (208) des fibres optiques en saillie par rapport à la trame (206), les extrémités en saillie (208) étant terminées par des sections d'entrée de lumière (210) ; une source lumineuse (212) présentant une face éclairante (214) s'étendant en vis-à-vis des sections d'entrée de lumière (210).

Le système d'éclairage comporte en outre un matériau (110) dans lequel les extrémités en saillie (208) et la face éclairante (214) sont noyées.

## Description

### Domaine technique

La présente invention concerne un système d'éclairage, une plaque d'immatriculation éclairante et un procédé de fabrication de la plaque d'immatriculation.

L'invention peut en particulier s'appliquer dans le domaine de la signalisation, par exemple routière, et dans le domaine des équipements automobiles, intérieurs ou extérieurs.

### État de la technique

Il a déjà été décrit dans l'état de la technique un système d'éclairage comportant un tissu éclairant et une source lumineuse. Le tissu éclairant comporte une trame qui est souple et comporte un assemblage régulier de fibres ou de fils entrecroisés, dont une partie au moins sont des fibres optiques, et des extrémités des fibres optiques en saillie par rapport à la trame, les extrémités en saillie étant terminées par des sections d'entrée de lumière. La source lumineuse présente une face éclairante s'étendant en vis-à-vis des sections d'entrée de lumière.

Dans cette publication, la source lumineuse comporte plusieurs sources lumineuses élémentaires, chaque formée d'une diode électroluminescente. Les extrémités en saillie sont regroupées en plusieurs faisceaux au moyen de bagues. Les sections d'entrée de lumière, qui sont en outre polies, de toutes les extrémités en saillie de chaque bouquet sont plaquées contre l'une des diodes électroluminescentes pour recevoir les rayons lumineux.

Cette manière de coupler les sections d'entrée de lumière à la source lumineuse présente comme problème de nécessiter un espace suffisant pour courber les fibres optiques et les rassembler en faisceaux, ce qui entraîne en outre un surcoût. Ainsi, il peut être souhaité de simplifier le couplage lumineux entre les sections d'entrée de lumière des fibres optiques du tissu éclairant et la source lumineuse.

### Exposé de l'invention

A cet effet, il est proposé un système d'éclairage, comportant : un tissu éclairant comportant une trame qui est souple et comporte un assemblage régulier de fibres ou de fils entrecroisés, dont une partie au moins sont des fibres optiques, et des extrémités des fibres optiques en saillie par rapport à la trame, les extrémités en saillie étant terminées par des sections d'entrée de lumière ; une source lumineuse présentant une face éclairante s'étendant en vis-à-vis des sections d'entrée de lumière ; caractérisé en ce qu'il comporte en outre un matériau dans lequel les extrémités en saillie et la face éclairante sont noyées.

De façon optionnelle, les extrémités en saillie sont espacées les unes des autres.

De façon optionnelle, les extrémités en saillie s'étendent parallèlement entre elles à 5° près.

De façon optionnelle, les extrémités en saillie s'étendent perpendiculairement à la face éclairante à 5° près.

De façon optionnelle, les sections d'entrée de lumière sont à distance de la face éclairante.

De façon optionnelle, le matériau présente un certain indice de réfraction, et la face éclairante présente un indice de réfraction égal à l'indice de réfraction du matériau à 5% près.

De façon optionnelle, les fibres optiques présentent un certain indice de réfraction, et le matériau présente un indice de réfraction égal à l'indice de réfraction des fibres optiques à 5% près.

De façon optionnelle, le matériau est dans la même matière que les fibres optiques.

Il est également proposé une plaque d'immatriculation éclairante, comportant : un boîtier ouvert vers l'avant d'une direction avant arrière ; une plaque transparente s'étendant dans le boîtier ; un système d'éclairage tel que défini précédemment, le tissu éclairant de ce système d'éclairage s'étendant derrière la plaque transparente.

Il est également proposé un procédé de fabrication d'une plaque d'immatriculation éclairante telle que définie précédemment, comportant : l'insertion de la source lumineuse dans une chambre du boîtier, de sorte que la face éclairante donne sur la chambre du boîtier ; l'insertion du tissu éclairant dans le boîtier, de sorte que les extrémités en saillie des fibres optiques s'étendent dans la chambre du boîtier en vis-à-vis de la face éclairante ; le coulage de matière liquide dans la chambre du boîtier, afin de noyer les extrémités en saillie et la face éclairante.

De façon optionnelle, le procédé de fabrication comporte en outre : la solidification de la matière coulée afin qu'elle devienne solide et forme un moulage.

### Brève description des dessins

La figure 1 est une vue de face d'une première plaque d'immatriculation éclairante mettant en oeuvre l'invention.
La figure 2 est une vue en coupe suivant la ligne II-II de la figure 1.
La figure 3 est une vue en coupe suivant la ligne III-III de la figure 2.
La figure 4 est une vue agrandie d'une trame d'un tissu éclairant de la plaque d'immatriculation des figures précédentes.
La figure 5 est une vue en coupe, suivant la ligne V-V de la figure 4, d'un fil réfléchissant de la trame de la figure 4.
La figure 6 est un schéma bloc illustrant des étapes d'un procédé de fabrication de la plaque d'immatriculation éclairante des figures précédentes.
La figure 7 est un schéma bloc illustrant des étapes d'un procédé de fonctionnement de la plaque d'immatriculation éclairante des figures précédentes.
La figure 8 est une vue en coupe, similaire à celle de la figure 2, d'une seconde plaque d'immatriculation éclairante mettant en oeuvre l'invention.

### Exemples de mise en oeuvre de l'invention

Des exemples de mise en oeuvre de l'invention vont à présent être décrits en référence aux figures.

Dans la description qui va suivre, les éléments seront situés les uns par rapports aux autres suivant un repère arbitraire défini par des directions : gauche - droite, notée G-D, haut - bas, notée H-B, et avant - arrière, notée Av-Ar.

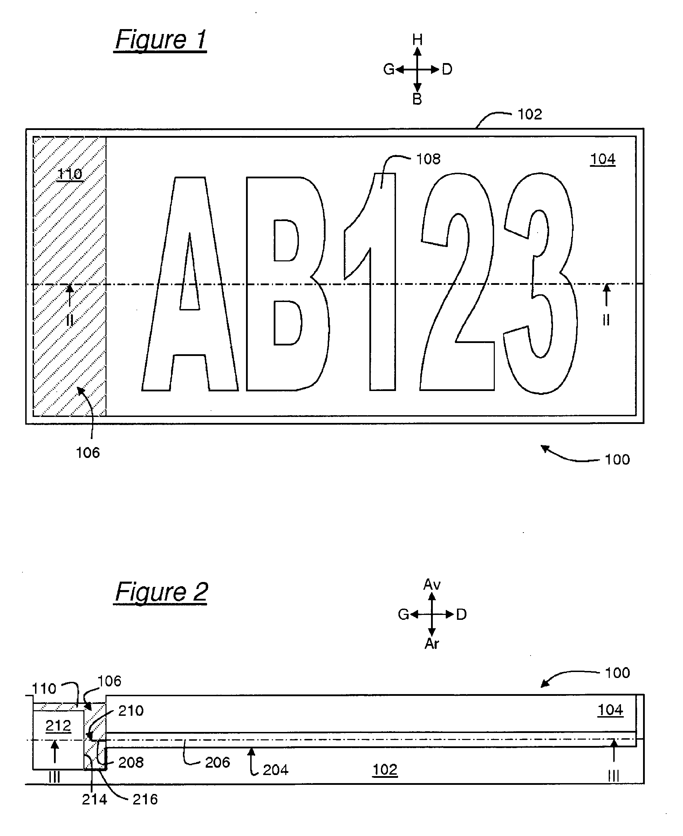

En référence à la figure 1, une plaque d'immatriculation éclairante 100 est représentée de face.

La plaque d'immatriculation éclairante 100 comporte tout d'abord un boîtier 102 de forme générale rectangulaire comportant un côté long suivant la direction G-D et un côté court suivant la direction H-B. Le boîtier 102 est ouvert vers l'avant de la direction Av-Ar et fermé sur les autres côtés.

La plaque d'immatriculation éclairante 100 comporte en outre une plaque transparente 104. Le terme « transparent » indique un taux de transmission de lumière supérieur à 80%. La plaque transparente 104 est de forme générale rectangulaire comme le boîtier 102 et s'étend dans ce dernier sauf en ce qui concerne une chambre 106 définie dans le boîtier 102. Dans l'exemple décrit, cette chambre 106 s'étend sur le côté gauche du boîtier 102. Un numéro d'immatriculation 108 (qui peut comporter tous types de symboles, en particulier des lettres et des chiffres) est en outre imprimé dans une matière opaque sur un film transparent (non représenté) collé sur la plaque transparente 104, sur la face arrière de cette dernière. En variante, le numéro d'immatriculation 108 pourrait être directement imprimé sur la plaque transparente 104.

La plaque d'immatriculation éclairante 100 comporte en outre un matériau 110 remplissant la chambre 106 du boîtier 102, à côté de la plaque transparente 104. Dans l'exemple décrit, le matériau 110 est un moulage solide. En variante, la chambre 106 pourrait être remplie de matériau liquide, tel qu'un fluide monomère, par exemple de l'huile de silicone.

En référence à la figure 2, la plaque d'immatriculation éclairante 100 comporte en outre un guide de lumière 204 s'étendant derrière la plaque transparente 104 et destiné à diffuser des rayons lumineux vers l'avant, c'est-à-dire vers la plaque transparente 104. Le guide de lumière 204 est un tissu éclairant. Le tissu éclairant 204 comporte tout d'abord une trame 206 qui est souple et comporte un assemblage régulier de fibres ou de fils entrecroisés, dont une partie au moins sont des fibres optiques. Les fibres optiques du tissu éclairant 204 sont destinées à être parcourues par des rayons lumineux et à les diffuser latéralement. Les fibres optiques sont par exemple réalisées en polyméthacrylate de méthyle (abrégé en PMMA, de l'anglais *« Polymethyl Methacrylate* »).

Les fibres optiques de la trame 206 présentent des extrémités en saillie 208 par rapport à la trame 206 sur un côté de cette dernière, dans la chambre 106 du boîtier 102. Dans l'exemple décrit, les extrémités en saillie 208 du tissu éclairant 204 dépassent du côté gauche de la trame 206. Les extrémités en saillie 208 sont sensiblement alignées le long de la direction H-B. De préférence, il y a entre 5 et 15 extrémités en saillie 208 par centimètre le long de la direction H-B. En outre, les extrémités en saillie 208 s'étendent sensiblement parallèlement les unes aux autres le long de la direction G-D. Par exemple, elles sont parallèles les unes aux autres à 10° près, de préférence à 5° près. Comme les extrémités en saillie 208 ne sont pas regroupées entre elles comme dans l'état de la technique, elles sont toutes espacées les unes des autres et ne se touchent donc pas.

Chaque extrémité en saillie 208 est terminée par une section d'entrée de lumière 210 destinée à recevoir les rayons lumineux. Comme les sections d'entrée de lumière 210 ne sont pas polies comme dans l'état de la technique, elles sont rugueuses, c'est-à-dire que leur état de surface est brut de coupe : lors de la fabrication du tissu éclairant 204, aucune étape de polissage des sections d'entrée de lumière 210 n'est prévue après la coupe des fibres optiques.

La plaque d'immatriculation éclairante 100 comporte en outre une source lumineuse 212 s'étendant dans l'espace 106 du boîtier 102. La source lumineuse 212 présente une face éclairante 214 destinée à envoyer les rayons lumineux en direction des sections d'entrée de lumière 210. La face éclairante 214 s'étend sensiblement en vis-à-vis des sections d'entrée de lumière 210, à distance de ces dernières, de sorte que les extrémités en saillie 208 des fibres optiques lui soient sensiblement perpendiculaires, par exemple à 5° près. La face éclairante 214 présente un indice de réfraction compris entre 1,4 et 1,6, par exemple compris entre 1,49 et 1,53, et de préférence égal à 1% près à l'indice de réfraction du matériau 110 remplissant la chambre 106.

Les extrémités en saillie 208 du tissu éclairant 204 et la source lumineuse 212, tout du moins sa face éclairante 214, sont noyées dans le matériau 110. Ainsi, chaque extrémité en saillie 208 n'est séparée de la face éclairante 214 que par le matériau 110. Ce matériau 110 présente un indice de réfraction supérieur à celui de l'air. Cet indice de réfraction est par exemple compris entre 1,3 et 1,7, par exemple compris entre 1,4 et 1,6, et de préférence égal à l'indice de réfraction des fibres optiques du tissu éclairant 204 (et donc en particulier des extrémités en saillie 208 des fibres optiques) à 1% près. Dans le cas où les fibres optiques sont en PMMA présentant un indice de réfraction de 1,51, le matériau 110 présente donc un indice de réfraction proche de 1,51, par exemple un indice de réfraction de 1,52. Par exemple, dans l'exemple décrit, le moulage 110 est formé de la même matière que les fibres optiques, tel que du PMMA, afin d'assurer la proximité des indices de réfraction.

De cette manière, il n'existe, sur le trajet des rayons lumineux, aucune interface avec un milieu (tel qu'une cavité d'air) présentant un indice de réfraction très différent de celui de la face éclairante 214 et des fibres optiques du tissu éclairant 204. Les rayons lumineux sont ainsi peu déviés sur ce trajet et un grand nombre d'entre eux peut atteindre une section d'entrée de lumière 210 avec un angle d'incidence leur permettant d'entrer dans la fibre optique correspondante.

Le boîtier 102 présente des parois délimitant la chambre 106 et qui sont au contact du matériau 110. Pour encore améliorer le couplage lumineux entre la source lumineuse 212 et les fibres optiques, ces parois sont pourvues d'un revêtement réfléchissant 216, de sorte que les rayons lumineux qui n'auraient pas atteint une section d'entrée de lumière 210 soient réfléchis dans la chambre 106 et puissent éventuellement revenir vers une section d'entrée de lumière 210 avec un angle d'incidence leur permettant d'entrer dans la fibre optique correspondante.

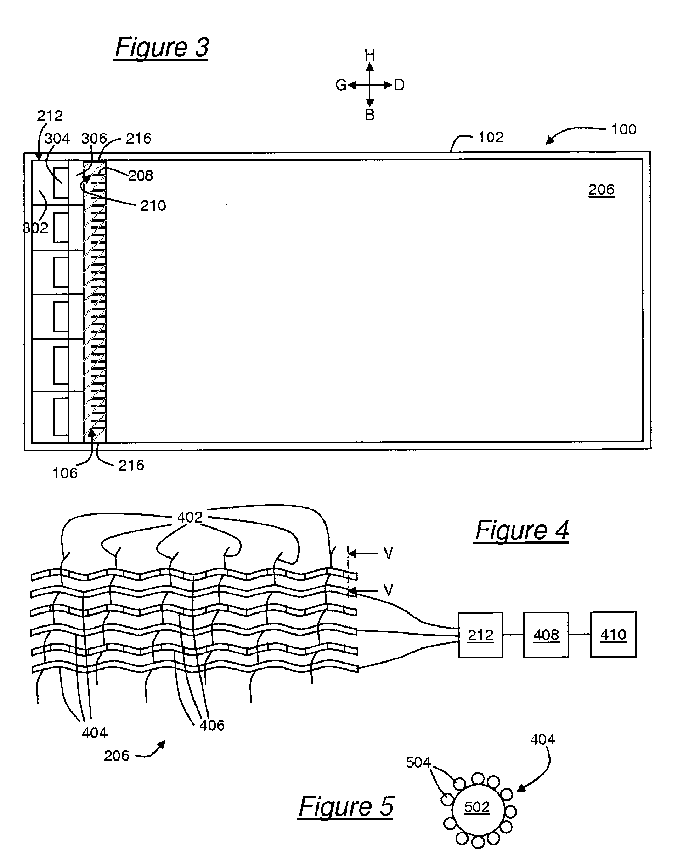

En référence à la figure 3, la source lumineuse 210 comporte plusieurs sources lumineuses élémentaires 302 alignées suivant la direction H-B. Sur la figure 3, les références ne sont appliquées que pour une seule des sources lumineuses élémentaires 302. Dans l'exemple décrit, les sources lumineuses élémentaires 302 sont des diodes électroluminescentes. Chaque diode électroluminescente 302 comporte un semi-conducteur 304 et une enveloppe externe 306 directement au contact du semi-conducteur 304. La face éclairante 214 correspond ainsi à la face de l'enveloppe externe 306 dirigée vers les extrémités en saillie 208. Cette enveloppe externe 306 est par exemple réalisée en polyépoxyde présentant un indice de réfraction compris entre 1,55 et 1,65.

En référence à la figure 4, la trame 206 du tissu éclairant 204 comporte des fils de chaîne 402 et des fils de trame 404, 406.

Les fils de trame 404, 406 comportent une alternance de fibres optiques 406 formant des fibres éclairantes et de fils rétro-réfléchissants 404. Dans l'exemple décrit, les fibres optiques 406 et les fils rétro-réfléchissants 404 alternent un à un. Dans d'autres modes de réalisation, d'autres alternances pourraient être utilisées, par exemple deux à deux ou bien un à deux. Chaque fibre optique 406 présente un traitement sur toute ou partie de sa longueur afin de laisser échapper la lumière latéralement, comme cela est réalisé par exemple dans les tissus vendus sous le nom Lightex® ou Luminex®.

Les fils de chaîne 402 sont transversaux aux fils de trame 404, 406, et de préférence translucides, c'est-à-dire présentant un taux de transmission de lumière compris entre 30% et 80%, afin de ne pas masquer les effets des fils éclairants 406 et/ou des fils rétro-réfléchissants 404.

La densité, l'alternance et de façon plus générale la position relative des fils rétro-réfléchissants 404 et des fibres optiques 406 sont adaptées aux effets recherchés.

Ainsi, pour obtenir des propriétés éclairantes importantes ou des propriétés de rétro-réflexion plus faible, le tissu éclairant 204 sera conçu de manière que les fibres optiques 406 présentent une densité supérieure ou égale à 12 fibres par centimètre le long de la direction H-B. À l'inverse, pour obtenir des propriétés de rétro-réflexion fortes, comme cela est souvent recherché dans les applications de signalisation routière, le tissu 204 sera conçu de manière que les fils rétro-réfléchissants 404 présentent une densité supérieure ou égale à 15 fils par centimètre le long de la direction H-B.

Par ailleurs, dans une variante non représentée, le tissu éclairant comporte, en alternance avec les fibres optiques et les fils rétro-réfléchissants, des fils optiquement neutres, c'est-à-dire non éclairants et non rétro-réfléchissants et de préférence translucides. L'insertion de ces fils neutres permet également de moduler les propriétés éclairantes et réfléchissantes du tissu.

Également dans une variante non représentée, les fils de chaîne comportent, en plus des fils translucides, des fils rétro-réfléchissants.

Ainsi, en jouant sur les différents paramètres présentés précédemment, il est possible de facilement concevoir un tissu présentant les propriétés éclairantes et rétro-réfléchissantes recherchées.

Par ailleurs, la plaque d'immatriculation éclairante 100 comporte un régulateur de courant 408 et un connecteur d'alimentation en courant 410 auquel la source lumineuse 212 est connectée par l'intermédiaire du régulateur de courant 408. Dans un perfectionnement, un interrupteur (non représenté) est également être prévu, par exemple entre le connecteur d'alimentation en courant 410 et le régulateur de courant 408.

En référence à la figure 5, chaque fil rétro-réfléchissant 404 comporte un fil principal 502 à section circulaire, par exemple en aluminium, enrobé sur tout ou partie de sa surface de microbilles transparentes 504.

En variante non représentée, les microbilles transparentes 504 peuvent être remplacées par des micro-prismes transparents.

En variante non représentée, les fils rétro-réfléchissants sont des fils plats tels que ceux vendus sous le nom de 3M Scotchlite® par la société 3M.

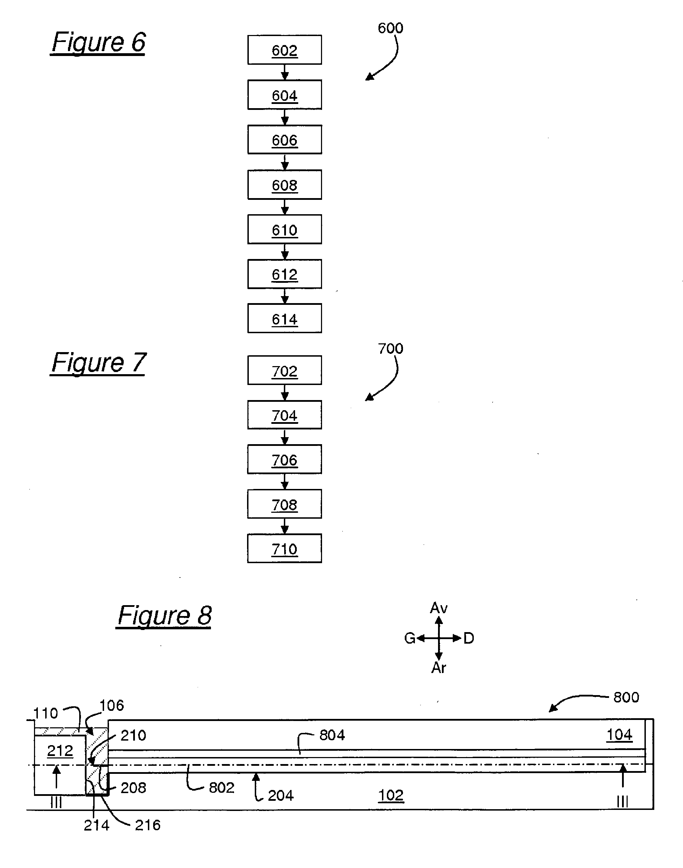

En référence à la figure 6, un procédé 600 de fabrication de la plaque d'immatriculation éclairante 100 comporte tout d'abord (étape 602) l'insertion de la source lumineuse 212 dans la chambre 106 du boîtier 102, de sorte que la face éclairante 214 donne sur la chambre 106 du boîtier 102.

Le procédé de fabrication 600 comporte en outre (étape 604) l'insertion du tissu éclairant 204 dans le boîtier 102, comme cela est représenté sur la figure 2. En particulier, les extrémités en saillie 208 des fibres optiques 404 s'étendent dans la chambre 106 du boîtier 102 en vis-à-vis de la face éclairante 214.

Le procédé de fabrication 600 comporte en outre (étape 606), alors que les extrémités en saillie 208 sont maintenues sensiblement parallèles entre elles et perpendiculaires à la face éclairante 214, le coulage de matière liquide dans la chambre 106 du boîtier 102, afin de noyer les extrémités en saillie 208 et la face éclairante 214.

Le procédé de fabrication 600 comporte en outre (étape 608) la solidification de la matière coulée afin qu'elle devienne solide et forme le moulage 110. Bien sûr, dans le cas où la matière 110 est destinée à rester liquide, l'étape de solidification est omise.

Le procédé de fabrication 600 comporte en outre (étape 610) l'impression du numéro d'immatriculation sur le film transparent.

Le procédé de fabrication 600 comporte en outre (étape 612) le collage du film transparent imprimé sur une face de la plaque transparente 104.

Le procédé de fabrication 600 comporte en outre (étape 614), d'une part, l'insertion de la plaque transparente 104 dans le boîtier 102, de sorte que la face sur laquelle le film transparent imprimé est collé forme la face arrière de la plaque transparente 104, et, d'autre part, la fixation de la plaque transparente 104 au boîtier 102, par exemple de manière non amovible.

En référence à la figure 7, un procédé 700 de fonctionnement de la plaque d'immatriculation éclairante 100 comporte tout d'abord (étape 702) la génération de rayons lumineux par la source lumineuse 212.

Le procédé de fonctionnement 700 comporte en outre (étape 704) la traversée du matériau 110 par les rayons lumineux, jusqu'à atteindre les sections d'entrée de lumière 210 avec un angle permettant l'entrée dans la fibre optique 404 correspondante.

Le procédé de fonctionnement 700 comporte en outre (étape 706) la diffusion latérale des rayons lumineux le long des fibres optiques 404.

Le procédé de fonctionnement 700 comporte en outre (étape 708) la réception de rayons lumineux depuis l'avant de la plaque d'immatriculation éclairante 100, et la traversée, par ces rayons lumineux, de la plaque transparente 104 jusqu'à atteindre le tissu éclairant 204, où ils sont réfléchis.

Le procédé de fonctionnement 700 comporte en outre (étape 710) le passage des rayons lumineux provenant de la source lumineuse 212 et des rayons lumineux réfléchis, au travers de la plaque transparente 104 afin de sortir par l'avant de la plaque d'immatriculation éclairante 100.

En référence à la figure 8, une seconde plaque d'immatriculation éclairante 800 est identique à la première plaque d'immatriculation éclairante 100, si ce n'est que le tissu éclairant 204 n'est plus rétro-réfléchissant. Ainsi, sa trame, portant à présent la référence 802, est dépourvue de fils rétro-réfléchissants.

Afin que la plaque d'immatriculation éclairante 800 présente toujours des propriétés rétro-réfléchissantes, elle comporte en outre un film transparent rétro-réfléchissant 804 s'étendant entre la plaque transparente 104 et la trame 802 du tissu éclairant 204. Le film transparent rétro-réfléchissant 804 est par exemple similaire à celui décrit dans la publication de brevet EP 1 946 157.

L'invention n'est pas limitée à l'exemple de réalisation décrit précédemment, mais au contraire définie par les revendications qui suivent.

Il apparaîtra en effet à l'homme de l'art que, à la lumière de l'enseignement qui vient de lui être apporté, diverses modifications peuvent être apportées à l'exemple de réalisation précédent.

En particulier, le système d'éclairage comportant le tissu éclairant, la source lumineuse et le moulage peut être utilisé dans d'autres objets qu'une plaque d'immatriculation, tels que par exemple des tapis ou des housses de siège de véhicule automobile.

Par ailleurs, dans les revendications qui suivent, les termes utilisés ne doivent pas être interprétés comme limitant les revendications aux éléments des exemples de mise en oeuvre décrits précédemment, mais doivent être interprétés pour y inclure tous les équivalents dont la prévision est à la portée de l'homme de l'art en appliquant ses connaissances générales.

### Liste des références :

| | |
|---|---|
| 100 | Première plaque d'immatriculation éclairante |
| 102 | Boîtier |
| 104 | Plaque transparente |
| 106 | Espace du boîtier |
| 108 | Numéro d'immatriculation |
| 110 | Moulage |
| 204 | Tissu éclairant |
| 206 | Trame |
| 208 | Extrémités en saillie |
| 210 | Sections d'entrée de lumière |
| 212 | Source lumineuse |
| 214 | Face éclairante |
| 216 | Revêtement réfléchissant |
| 302 | Sources lumineuses élémentaires |
| 304 | Semi-conducteur |
| 306 | Enveloppe externe |
| 402 | Fils de chaîne |
| 404 | Fils rétro-réfléchissants |
| 406 | Fibres optiques |
| 408 | Régulateur de courant |
| 410 | Connecteur d'alimentation en courant |
| 502 | Fil principal |
| 504 | Microbilles |
| 600 | Procédé de fabrication |
| 602 | Insertion du tissu éclairant 204 et de la plaque transparente 104 dans le boîtier 102 |
| 604 | Insertion de la source lumineuse 216 dans l'espace 106 du boîtier 102 |
| 606 | Coulage de matière liquide dans l'espace 106 du boîtier 102 |
| 608 | Séchage de la matière coulée |
| 700 | Procédé de fonctionnement |
| 702 | Génération de rayons lumineux par la source lumineuse 212 |
| 704 | Traversée du moulage 106 par les rayons lumineux |
| 706 | Diffusion latérale des rayons lumineux le long des fibres optiques 404 |
| 708 | Réception de rayons lumineux depuis l'avant de la plaque d'immatriculation éclairante 100 |
| 710 | Passage des rayons lumineux au travers de la plaque transparente 104 afin de sortir par l'avant de la plaque d'immatriculation éclairante 100 |
| 800 | Seconde plaque d'immatriculation éclairante |
| 802 | Trame |
| 804 | Film transparent rétro-réfléchissant |

## Revendications

1. Système d'éclairage, comportant :
- un tissu éclairant (204) comportant :
- - une trame (206 ; 802) qui est souple et comporte un assemblage régulier de fibres ou de fils entrecroisés, dont une partie au moins sont des fibres optiques (404),
- - des extrémités (208) des fibres optiques (404) en saillie par rapport à la trame (206 ; 802), les extrémités en saillie (208) étant terminées par des sections d'entrée de lumière (210),
- une source lumineuse (212) présentant une face éclairante (214) s'étendant en vis-à-vis des sections d'entrée de lumière (210), **caractérisé en ce qu'**il comporte en outre un matériau (110) dans lequel les extrémités en saillie (208) et la face éclairante (214) sont noyées.

2. Système d'éclairage selon la revendication 1, dans lequel les extrémités en saillie (208) sont espacées les unes des autres.

3. Système d'éclairage selon la revendication 2, dans lequel les extrémités en saillie (208) s'étendent parallèlement entre elles à 5° près.

4. Système d'éclairage selon la revendication 3, dans lequel les extrémités en saillie (208) s'étendent perpendiculairement à la face éclairante à 5° près.

5. Système d'éclairage selon l'une des revendications 1 à 4, dans lequel les sections d'entrée de lumière (210) sont à distance de la face éclairante (214).

6. Système d'éclairage selon l'une des revendications 1 à 5, dans lequel le matériau (110) présente un certain indice de réfraction, et dans lequel la face éclairante (214) présente un indice de réfraction égal à l'indice de réfraction du matériau (110) à 5% près.

7. Système d'éclairage selon l'une des revendications 1 à 6, dans lequel les fibres optiques (404) présentent un certain indice de réfraction, et dans lequel le matériau (110) présente un indice de réfraction égal à l'indice de réfraction des fibres optiques (404) à 5% près.

8. Système d'éclairage selon l'une des revendications 1 à 6, dans lequel le matériau (110) est dans la même matière que les fibres optiques.

9. Plaque d'immatriculation éclairante, comportant :
- un boîtier (102) ouvert vers l'avant d'une direction avant arrière (Av-Ar),
- une plaque transparente (104) s'étendant dans le boîtier (102),
- un système d'éclairage selon l'une des revendication 1 à 8, le tissu éclairant (204) de ce système d'éclairage s'étendant derrière la plaque transparente (104).

10. Procédé de fabrication d'une plaque d'immatriculation éclairante selon la revendication 9, comportant :
- l'insertion (602) de la source lumineuse (212) dans une chambre (106) du boîtier (102), de sorte que la face éclairante (214) donne sur la chambre (106) du boîtier (102),
- l'insertion (604) du tissu éclairant (204) dans le boîtier (102), de sorte que les extrémités en saillie (208) des fibres optiques (404) s'étendent dans la chambre (106) du boîtier (102) en vis-à-vis de la face éclairante (214),
- le coulage (606) de matière liquide dans la chambre (106) du boîtier (102), afin de noyer les extrémités en saillie (208) et la face éclairante (214).

11. Procédé de fabrication selon la revendication 10, comportant en outre :
- la solidification (608) de la matière coulée afin qu'elle devienne solide et forme un moulage (110).
